# EUROPÄISCHE PATENTSCHRIFT

(11) **EP 2 001 269 B1**
(45) Veröffentlichungstag und Bekanntmachung des Hinweises auf die Patenterteilung: **22.06.2016**
(21) Anmeldenummer: 08164999.8
(22) Anmeldetag: 30.06.2003
(51) Int. Cl.: H05B 33/08

(54) **Stromversorgung für Lumineszenzdioden**
Electricity supply for luminescence diodes
Alimentation en courant pour diodes luminescentes

(30) Priorität: 04.07.2002 DE 10230103
(43) Veröffentlichungstag der Anmeldung: 10.12.2008
(62) Teilanmeldung aus: 06010830.5
(73) Patentinhaber: Tridonic Jennersdorf GmbH, 8380 Jennersdorf (AT); Tridonic AG, 8755 Ennenda (CH)
(72) Erfinder: Tobler, Felix, 8718 Schänis (CH); Zimmermann, Michael, 8888 Heiligenkreuz (CH); Tasch, Stefan, 8380 Jennersdorf (AT)
(74) Vertreter: Rupp, Christian

(56) Entgegenhaltungen:
- EP-A- 0 948 241
- WO-A-02/05356
- WO-A-02/13231
- CA-A1- 2 312 285
- DE-A- 4 022 498
- DE-U- 20 008 346
- US-A- 5 897 194
- US-A- 6 045 240
- US-B1- 6 345 903

## Beschreibung

Die vorliegende Erfindung bezieht sich auf eine Stromversorgung für LEDs. Dabei kommt ein Wandlerprinzip zur Anwendung, das einen periodisch um einen Gleichstromwert schwankenden, dreieckförmigen Wechselstrom durch die Lumineszenzdioden erzeugt. Durch dieses Verfahren wird dafür gesorgt, dass sowohl der Lade- als auch der Entladestrom eines induktiven Blindwiderstands im Lastkreis als Diodenstrom durch die Lumineszenzdioden fließt.

Hochleistungsfähige lichtemittierende Halbleiter-Lumineszenzdioden (engl.: "Light-Emitting Diodes", LEDs), kurz Leuchtdioden genannt, haben schon lange ihren Platz in vielen Bereichen erobert, in denen ein Bedarf an optischen Anzeigesystemen oder Beleuchtungssystemen mit geringem Energieverbrauch besteht, wie z.B. in der Verkehrs- und Signaltechnik. Durch entscheidende technische Innovationen im Bereich der lichtemittierenden Halbleiter-Bauelemente, mit Hilfe derer heute eine höhere Lichtausbeute sowie eine Ausweitung des Farbspektrums auf den gesamten Wellenlängenbereich des sichtbaren Lichts zwischen 780 nm (violett) und 380 nm (dunkelrot) erreichbar ist, erschließt sich der Optoelektronik lichttechnisch ein völlig neuer Markt.

Zur Erzielung einer gleichmäßigen Ausleuchtung von Flächen werden dabei in der Regel Streuscheiben verwendet. Aufgrund des Netzbetriebes, vor allem bei Anwendungen im Außenbereich, sind üblicherweise Leuchtengehäuse erforderlich, um die verwendeten elektronischen Bauteile vor dem Eindringen von Feuchtigkeit zu schützen.

Um die zentrale Idee der vorliegenden Erfindung zu verstehen, soll im Folgenden kurz auf die wichtigsten Merkmale konventioneller Verfahren und Technologien nach dem Stand der Technik zur Herstellung von Halbleiter-Lumineszenzdioden eingegangen werden, vor allem auf die sogenannte "Chip-on-Board" (COB)-Technologie, welche in den letzten Jahren stark an Bedeutung gewonnen hat.

Bei der "Chip-on-Board" (COB)-Technologie wird der rohe LED-Chip mit der Struktur und den Anschlüssen nach oben (engl.: "face up") mit Leitkleber auf der Leiterplatte angebracht. Dieser Vorgang wird im angloamerikanischen Sprachgebrauch als "Die Bonding" bezeichnet. Nach dem Aushärten des Klebers erfolgt in einem zusätzlichen Arbeitsschritt das Verbinden der Chipanschlüsse mit der Leiterplatte mit Hilfe eines aus der Herstellung integrierter Schaltungen bekannten Wire-Bonders. Dabei werden die einzelnen Chipahschlüsse und die Leiterplatte mit einem Golddraht verbunden. Durch die Verwendung von speziellen Leiterplatten-Materialien können hervorragende Wärmeleiteigenschaften erreicht werden. Daraus resultiert eine längere Lebensdauer und eine höhere Lichtausbeute pro Fläche. Nach Aufbringung einer polymeren Schicht ist das LED-Array vor mechanischer Beschädigung durch Erschütterung oder Vibrationen geschützt. Spezielle Leiterplatten mit Reflektorschichten dienen dabei zur Lichtbündelung und Erhöhung der Lichtstärken bei kleineren Abstrahlwinkeln.

Im Vergleich zu herkömmlichen LED-Modulen können somit durch Verwendung von Lumineszenzdioden, die mittels COB-Technologie als LED-Arrays auf einer Leiterplatte aufgebracht sind, effiziente Beleuchtungseinheiten hoher Lichtausbeute, langer Lebensdauer, platzsparender Bauweise und einem relativ geringen Kostenaufwand hergestellt werden. Aufgrund der erreichbaren Lichtstromwerte sind diese Module nicht nur als Signal- und Hinterbeleuchtungen interessant, sondern können direkt als Beleuchtungsmittel eingesetzt werden. In COB-Technologie hergestellte LED-Arrays mit einem Abstrahlwinkel von 180° erlauben eine helle Ausleuchtung von Flächen mit einer homogenen Lichtverteilung; die mit der Ausleuchtung durch eine mit 40 bis 50 mA betriebenen Beleuchtungsanlage mit Leuchtstofflampen vergleichbar ist. Ein weiterer Pluspunkt ist der um 50 % geringere Stromverbrauch gegenüber einer derartigen Beleuchtungsanlage.

Aus hochleistungsfähigen Lumineszenzdioden aufgebaute Punktlichtquellen in COB-Technologie eignen sich ideal für kleine Arbeits- und Leseleuchten, als flexibel nutzbare Lichtquellen in Spotbeleuchtungen, als zentrale Lichtquelle für Orientierungsleuchten etc.

Aus der Offenlegungsschrift DE 100 26 661 A1 ist ein universelles, kompaktes LED-Beleuchtungsmodul bekannt, das für Innen- und Außenleuchten im Netzbetrieb verwendet werden kann und ohne Verwendung weiterer Betriebsgeräte, wie z.B. Netztransformatoren oder speziell dimensionierter Schaltnetzteile, auskommt. Die als Lichtquellen vorgesehenen lichtemittierenden Halbleiter-Bauelemente werden dabei über ein Kondensatornetzteil angesteuert und mit Strom versorgt. In der bevorzugten Ausführungsform dieser Erfindung treten die lichtabstrahlenden Oberflächen der einzelnen Lumineszenzdioden aus der Vergussmasse linsenförmig hervor. Als äußere Bauform für das hierin offenbarte LED-Beleuchtungsmodul dient eine Vergussmasse (z.B. ein Gießharz) oder ein Gehäuse, in dem die elektronischen Komponenten vor Feuchtigkeitseindringung geschützt montiert sind. Das Modul kann dabei als Lampe oder Leuchte direkt an einem Stromversorgungsnetz betrieben, überall angebracht und kostengünstig hergestellt werden.

Bei herkömmlichen Kondensatornetzteilen nach dem Stand der Technik kann (im Gegensatz zu der erfindungsgemäßen elektronischen Lösung) der Effektivwert der Eingangswechselspannung variabel gewählt werden (z.B. zwischen 100 V_{AC} und 277 V_{AC}) ; sogar eine Versorgung des Netzteils mit Gleichspannung ist möglich.

Da jedoch bei einer Kondensatornetzteilschaltung die Größe der verwendeten Kondensatoren mit steigender Betriebsleistung stark zunimmt, können mit einem derartigen Netzteil nur geringe Leistungen bei akzeptabler Baugröße realisiert werden. Zudem verschlechtert sich die Leistung der in Kondensatornetzteilen üblicherweise verwendeten Elektrolytkondensatoren mit der Zahl der Betriebsstunden. Aus den vorstehend genannten Gründen ist für den Betrieb von Hochleistungs-LEDs (mit einer Betriebsleistung von bis zu 4 W) der Einsatz alternativer elektronischer Lösungen erforderlich.

In der EP 0 948 241 A2 ist ein mit Gleichspannung betriebenes Notlichtgerät beschrieben. Dabei wird eine Speicherdrossel mittels eines steuerbaren Schalters gesteuert, wobei bei Erkennen eines Stromnullpunkts des Stroms durch die Speicherdrossel der Schalter eingeschaltet und bei Erfassen des Maximalstroms durch die Speicherdrossel der Schalter ausgeschaltet wird.

In der CA 2 312 285 A1 wird ein Leuchtmittel beschrieben, welches blaue LEDs mit Farbkonversionsmaterial aufweist, die weißes Licht erzeugen.

### AUFGABE DER VORLIEGENDEN ERFINDUNG

Ausgehend von dem oben genannten Stand der Technik, widmet sich die vorliegende Erfindung der Aufgabe, eine Stromversorgung bereitzustellen, die für blaue Lumineszenzdioden mit Farbkonversionsmaterial angepasst ist, die weißes Licht erzeugeu

Diese Aufgabe wird erfindungsgemäß durch die Merkmale des unabhängigen Patentanspruchs gelöst. Vorteilhafte Ausführungsbeispiele, die den Gedanken der Erfindung weiterbilden, sind in den abhängigen Patentansprüchen definiert.

### ZUSAMMENFASSENDE DARSTELLUNG DER VORLIEGENDEN ERFINDUNG

Die vorliegende Erfindung offenbart eine Regelungsschaltung nach dem Oberbegriff des Anspruchs 1, die in einfacher Weise auf die jeweilige Stromanforderung einer LED angepasst werden kann.

Bei Verwendung des erfindungsgemäßen Schaltungsprinzips können auch mehrere in Serie geschaltete Lumineszenzdioden an Niedervoltspannungen von mehr als 30 V angeschlossen werden. Die Regelschaltung wirkt dabei als Konstantstromquelle.

Das mit Hilfe dieser Regelschaltung realisierte Verfahren arbeitet nach einem Wandlerprinzip, bei dem ein periodisch um einen Gleichstromwert schwankender, dreieckförmiger Strom durch die LED fließt. Dabei ist mit Hilfe einer schaltungstechnischen Maßnahme dafür gesorgt, dass sowohl der Lade- als auch der Entladestrom eines als Speicherdrossel in Serie zu den Lumineszenzdioden geschalteten induktiven Blindwiderstands als Diodenstrom durch die Lumineszenzdioden fließt. Der Vorteil dieses Verfahrens besteht in einer Reduzierung der Gesamtverlustleistung des LED-Beleuchtungsmoduls.

### KURZBESCHREIBUNG DER ZEICHNUNGEN

Weitere Eigenschaften, Merkmale, Vorteile und Zweckmäßigkeiten der zugrunde liegenden Erfindung resultieren aus den untergeordneten abhängigen Patentansprüchen, welche nunmehr, bezugnehmend auf die Figuren der begleitenden Zeichnungen und anhand einer detaillierten Beschreibung eines Ausführungsbeispiels der zugrunde liegenden Erfindung, erläutert werden sollen. Hierbei zeigen:
- Fig. 1: ein LED-Beleuchtungsmodul, bestehend aus einer über ein Stromversorgungsnetz mit Wechselstrom gespeisten Anordnung mehrerer in Serie geschalteter Lumineszenzdioden, die auf einer Leiterplatte in einer "Chip-on-Board" (COB)-Technologie als LED-Dice aufgebracht sind,
- Fig. 2a: eine erste Variante einer Regelschaltung zur Bereitstellung einer geregelten Stromversorgung für LEDs, bei der ein im Rückkopplungszweig zur galvanischen Entkopplung (Potenzialtrennung) verwendete Signalübertragungsglied als Optokopplerdiode realisiert ist,
- Fig. 2b: eine zweite Variante der erfindungsgemäßen Regelschaltung zur Bereitstellung einer geregelten Stromversorgung für LEDs, bei der ein im Rückkopplungszweig zur galvanischen Entkopplung (Potenzialtrennung) verwendete Signalübertragungsglied als Pegel- bzw. Potenzialversatzstufe realisiert ist und
- Fig. 3: den Zeitverlauf des durch eine Lumineszenzdiode fließenden Stromes.

### DETAILLIERTE BESCHREIBUNG DER ERFINDUNG

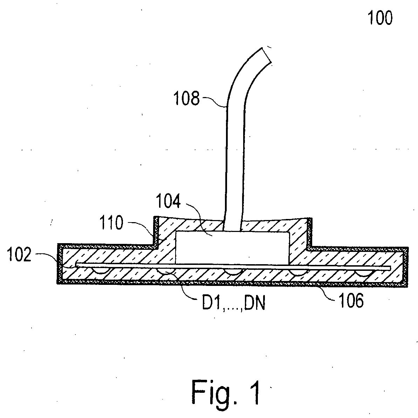

Im Folgenden werden die Funktionen der in einem Ausführungsbeispiel der vorliegenden Erfindung enthaltenen Baugruppen, wie in den Figuren 1 bis 3 abgebildet, näher beschrieben. Die Bedeutung der mit Bezugszeichen versehenen Symbole in den Figuren 1 bis 3 kann der beigefügten Bezugszeichenliste entnommen werden.

In Fig. 1 ist der prinzipielle Aufbau eines LED-Beleuchtungsmoduls 100 im Längsschnitt schematisch dargestellt. Es verfügt über eine mit Wechselstrom gespeiste Anordnung einer Anzahl von in Serie geschalteten Lumineszenzdioden D1,...,DN, die als sogenannte LED-Dice auf einer Leiterplatte 102 in einer "Chip-on-Board" (COB)-Technologie aufgebracht sind.

Die Erfindung lässt sich indessen ebenso auf die Ansteuerung anderer Konfigurationen von LEDs und insbesondere einer einzelnen LED anwenden.

Nach einem Ausführungsbeispiel der Erfindung verfügt die wärmeleitende, keramische Leiterplatte 102 des LED-Beleuchtungsmoduls 100 über eine direkte Netzstromversorgung, bestehend aus einem Netzteil 104 und einem seitlich aus dem Netzteil 104 herausgeführten Anschlusskabel, Stecker und/oder Stecksockel 108 zum Anschluss an ein Wechselstromnetz. Die Lumineszenzdioden D1,...,DN sind dabei zum Schutz vor mechanischer Beschädigung in einem transparenten Gehäuse 106 mit einer als optisch aktive Linsenfläche dienenden hochtransparenten Polymermasse 110 untergebracht.

Zur Erzielung einer gebündelten, homogenen Lichtverteilung im Bereich der Hauptstrahlrichtungen der einzelnen Lumineszenzdioden D1,...,DN verfügt das erfindungsgemäße LED-Beleuchtungsmodul 100 darüber hinaus über sogenannte Fresnel-Linsen in Form einer Linsenplatte, welche zentrisch oberhalb einer jeden Lumineszenzdiode D1,...,DN innerhalb des transparenten Gehäuses 106 positioniert und seitlich verklebt sind.

Um auf der Seite der Leiterplatte 102, auf der die Lumineszenzdioden D1,...,DN aufgebracht sind, beim Vergießen der hochtransparenten Polymermasse 110 innerhalb des transparenten Gehäuses 106 die Entstehung von Luftblasen zu vermeiden, sind auf der Leiterplatte 102 Löcher eingebracht. Bei der Herstellung des LED-Beleuchtungsmoduls 100 werden die einzelnen ungehäusten LED-Dice D1,...,DN im Rahmen eines Spritzgussverfahrens oder eines anderen geeigneten Gießverfahrens direkt mit der hochtransparenten Polymermasse 110 umspritzt. Die Polymermasse 110 besteht dabei aus einem thermisch gut leitenden Material, das elektrisch isolierend wirkt.

Da weißes Licht mit Hilfe einzelner Lumineszenzdioden nicht erzeugt werden kann, ist erfindungsgemäß die Zugabe eines Farbkonversionsmittels in die Polymermasse 110 im Bereich der Hauptstrahlrichtung oberhalb der Position monochromatische Photonenstrahlung im Spektralbereich der Farbe blau emittierender Lumineszenzdioden D1,...,DN vorgesehen.

Aufgrund einer platzsparenden Anordnung der verwendeten Bauteile und der Verwendung des oben erwähnten effizienten COB-Herstellungsverfahrens beträgt die Bauhöhe der Gesamtanordnung des erfindungsgemäßen LED-Beleuchtungsmoduls 100 nicht mehr als beispielsweise 1,0 cm.

Nach einem Ausführungsbeispiel der zugrunde liegenden Erfindung sind die einzelnen Lumineszenzdioden D1,...,DN dimmbar, wobei zur Dimmung der Helligkeit der von ihnen emittierten Photonenstrahlung eine Ansteuerung über Funk- oder Infrarotsignale bzw. einen an einen Bus angeschlossenen Mikrocontroller denkbar ist.

Das Netzteil 104 zur Gewährleistung einer direkten Netzstromversorgung der Leiterplatte 102 kann erfindungsgemäß in einem Spannungseingangsbereich von 100 V bis 277 V betrieben werden. Es kann dabei auch vorgesehen sein, dass das Netzteil 104 sowohl mit Wechselspannung als auch mit Gleichspannung betreibbar ist und neben dem Betrieb einzelner LEDs für den Betrieb mit seriell als auch für den Betrieb mit parallel geschalteten Lumineszenzdioden D1,...,DN verwendet werden kann.

Die Innenseiten des transparenten Gehäuses 106 (mit Ausnahme des lichtemittierenden Bereiches) bestehen erfindungsgemäß aus einem thermisch gut leitenden Material, das auf der Außenseite zur Wärmeabfuhr von einem elektrisch nicht leitenden Material überzogen ist. Dabei kann das transparente Gehäuse 106 mit Hilfe eines seitlich aus dem Gehäuse herausgeführten Steckers, Stecksockels und/oder Anschlusskabels 108 kontaktiert werden.

Nach einem Ausführungsbeispiel der zugrunde liegenden Erfindung ist dabei vorgesehen, dass um jede einzelne, als LED-Die ausgebildete Lumineszenzdiode D1,...,DN ein parabolisch oder trichterförmig ausgeformter, aus einem thermisch gut leitfähigen, hochreflektierenden Material bestehender Reflektor einer Reflektorplatte, die auf der Unterseite elektrisch isoliert ist, von oben auf die Leiterplatte 102 aufgesetzt ist. Jeder einzelne Reflektor besteht dabei aus einem Kunststoff mit verspiegelter Innenseite.

Die Rückseite der Leiterplatte 102 ist erfindungsgemäß an einen Kühlkörper angekoppelt, welcher zur Übertragung der beim Betrieb des LED-Beleuchtungsmoduls 100 entstehenden Abwärme auf das Gehäuse 106 oder eine Halterung (nicht dargestellt) dient.

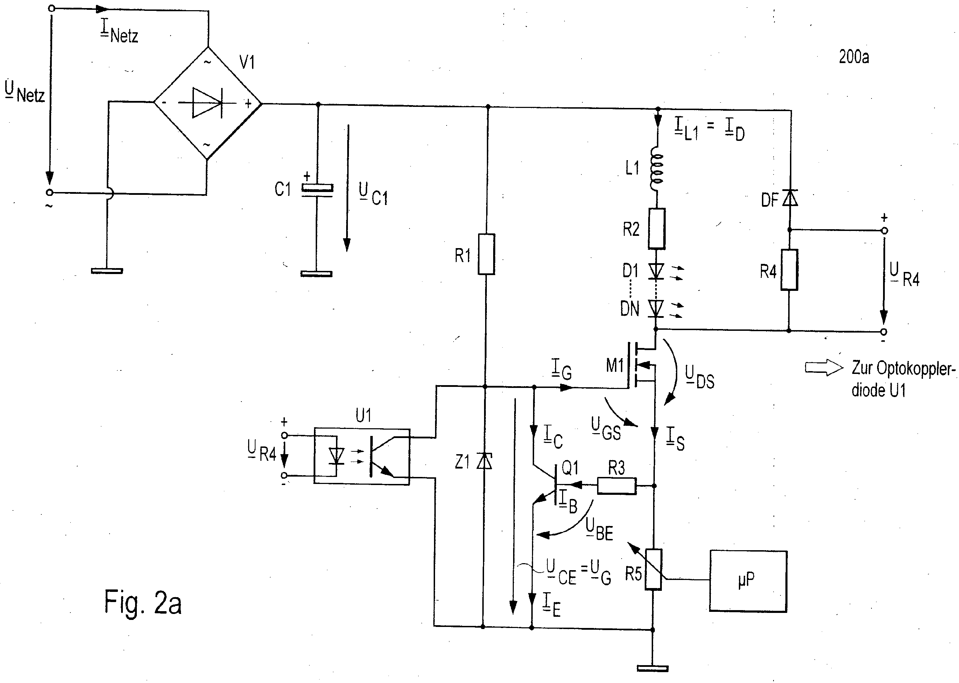

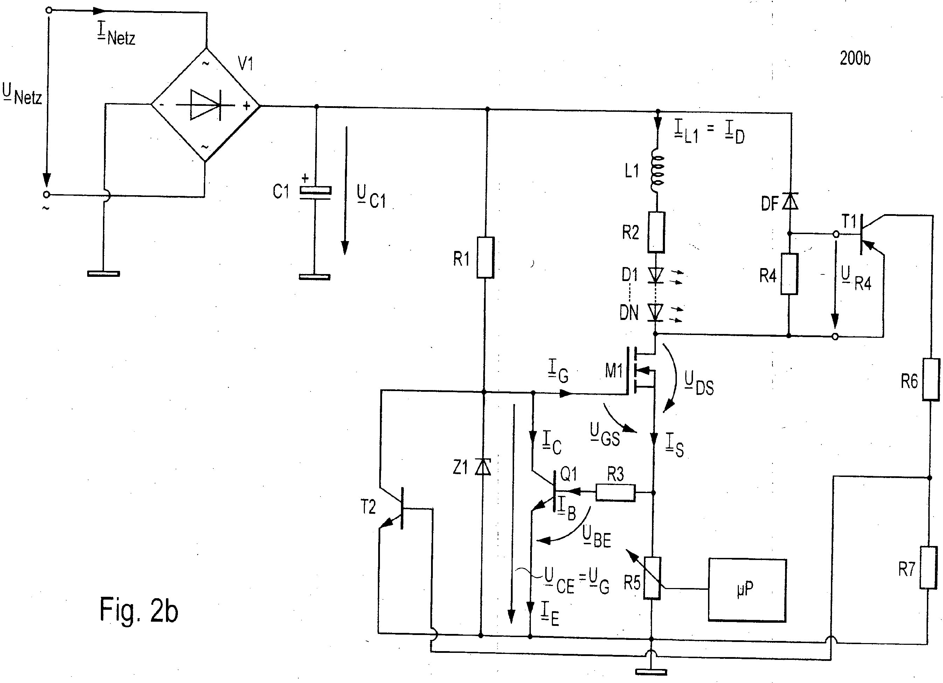

Bezugnehmend auf Fig. 2a und 2b, werden nun zwei Varianten einer erfindungsgemäßen Regelschaltung erläutert.

Über eine Gleichrichter-Vollbrückenschaltung V1 werden die positiven und/oder negativen Netzhalbwellen des von einem Stromversorgungsnetz gelieferten Wechselstroms *I_{Netz}* gleichgerichtet. An dem mit dem Masseknoten verbundenen Speicherkondensator C1 am Ausgangstor der Gleichrichter-Vollbrücke V1 liegt somit eine mit der Netzspannung *U_{Netz}* variierende, geglättete und gleichgerichtete Zwischenkreisspannung *U*_{*C*1} an.

Nach dem Anlegen einer geeignet dimensionierten Steuerspannung *U_{G}* an das Gate eines beispielsweise als selbstsperrender n-Kanal-MOS-Feldeffekttransistor realisierten ersten Halbleiter-Leistungsschalters M1 wird diese erste elektronisch steuerbare Schaltstufe elektrisch leitend, so dass ein Drainstrom zu fließen beginnt, der infolge der als Energiespeicher wirkenden Speicherdrossel L1 kontinuierlich ansteigt und als Diodenstrom *I_{D}* durch die Lumineszenzdioden D1,...,DN hindurchfließt. Der Anstieg dieses Diodenstroms *I_{D}* bei Ladung des Speicherdrossel L1 wird von einem ersten niederohmigen Nebenschluss-Messwiderstand R5 erfasst, der zugleich im Lastkreis des ersten Leistungsschalters M1 sowie im Steuerkreis des zweiten Leistungsschalters Q1 angeordnet und mit dem Masseknoten verbunden ist. Neben den beiden Leistungsschaltern M1 und Q1 kann erfindungsgemäß auch eine zeitabhängige Steuerung zur Umschaltung zwischen den in der Speicherdrossel L1 ablaufenden Lade- bzw. Entladevorgängen vorgesehen sein.

Dieser Nebenschluss-Messwiderstand R5 kann dabei vorzugsweise als Potentiometer zur Dimmung der dem Diodenstrom *I_{D}* [mA] proportionalen Lichtstärke *Iᵥ* [mcd] (d.h. der Helligkeit) der von den Lumineszenzdioden D1,...,DN emittierten Photonenstrahlung ausgebildet sein.

Sobald nun die Basis-Emitter-Spannung *U_{BE}* einer z.B. als bipolarer npn-Transistor ausgebildeten zweiten elektronisch steuerbaren Schaltstufe Q1 eine bestimmte Schaltschwelle erreicht, wird der Halbleiter-Leistungsschalter Q1 elektrisch leitend, so dass ein Kollektorstrom *I_{c}* zu fließen beginnt und die Gatespannung *U_{G}* der ersten elektronisch steuerbaren Schaltstufe M1 vorübergehend auf "Low"-Pegel absinkt, wodurch wiederum die Schaltstufe M1 kurzzeitig gesperrt wird. Dies hat zur Folge, dass der über die Speicherdrossel L1 aufgebaute Diodenstrom *I_{D}* durch eine Freilaufdiode DF und einen zu dieser in Serie geschalteten zweiten niederohmigen Nebenschluss-Messwiderstand R4 im Parallelzweig zur Serienschaltung der Lumineszenzdioden D1,...,DN und dem durch die Speicherdrossel L1 gebildeten induktiven Blindwiderstand X_{L1} abgeleitet wird.

Mit Hilfe dieser verhältnismäßig einfachen schaltungstechnischen Maßnahme wird eine Gefährdung des ersten Halbleiter-Leistungstransistörs M1 durch die beim Abschalten des Drainstroms *I_{D}* (beim Sperren von M1) am induktiven Blindwiderstand X_{L1} abfallende Induktionsspannung *U_{L1}* vermieden, die ein Vielfaches der Betriebsspannung betragen kann.

Die an dem niederohmigen Nebenschluss-Messwiderstand R4 abfallende Spannung *U_{R4}* dient dabei zur Erfassung des durch die Schaltschwelle der zweiten elektronisch steuerbaren Schaltstufe Q1 auf einen Minimalwert begrenzten Absinkens des durch die Lumineszenzdioden D1,...,DN fließenden Diodenstroms *I_{D}* im freilaufenden Strompfad.

Nach Rückkopplung des am zweiten Messwiderstand R4 abgegriffenen, durch die Lumineszenzdioden D1,...,DN fließenden Diodenstromes *I_{D}* auf den Steuereingang der ersten Schaltstufe M1 über ein Signalübertragungsglied U1 zur galvanischen Entkopplung (Potenzialtrennung) der am zweiten Messwiderstand R4 abfallenden Spannung *U_{R4}* und der Gatespannung *U_{G}* der ersten Schaltstufe M1 wirkt dieser übersetzte, abklingende Diodenstrom *I_{D}* als "neuer" Gatestrom *I_{G}*. Das hat zur Folge, dass die Gatespannung *U_{G}* der ersten elektronisch steuerbaren Schaltstufe M1 auf dem Pegelwert "Low" verharrt und die Schaltstufe M1 daher so lange gesperrt bleibt, bis der Stromfluss durch das Signalübertragungsglied U1 unter eine bestimmte Schwelle abgesunken ist. Nachdem die Schaltstufe M1 wieder zu leiten begonnen hat, wird der oben beschriebene Vorgang in periodisch wiederkehrender Folge fortgesetzt.

Bei dem erfindungsgemäßen Verfahren fließt also sowohl der Lade- als auch der Entladestrom *I_{L1}* des induktiven Blindwiderstands X_{L1} als Diodenstrom *I_{D}* durch die Anordnung der seriell geschalteten Lumineszenzdioden D1,...,DN des erfindungsgemäßen LED-Beleuchtungsmoduls 100, so dass sich ein periodisch um einen Mittelwert pendelnder, dreieckförmiger Strom durch die LED ergibt.

Das im Rückkopplungszweig des an dem zweiten Messwiderstand R4 abgegriffenen, durch die Lumineszenzdioden D1,...,DN fließenden Stromes *I_{D}* auf den Steuereingang der ersten Schaltstufe M1 zur galvanischen Entkopplung (Potenzialtrennung) der an dem zweiten Messwiderstand R4 abfallenden Spannung *U_{R4}* und der Steuerspannung *U_{G}* der ersten Schaltstufe M1 verwendete Signalübertragungsglied U1 kann dabei vorzugsweise als Optokopplerdiode (vgl. Fig. 2a) oder als Pegelversatzstufe (vgl. Fig. 2b) ausgebildet sein. Eine Zenerdiode Z1 dient hierbei als Spannungsbegrenzer zur Stabilisierung der an den Ausgangsklemmen der Optokopplerdiode bzw., Pegelversatzstufe U1 abgreifbaren Steuerspannung *U_{G}* des ersten elektronisch steuerbaren Halbleiter-Leistungstransistors M1.

Bei der Realisierung der zweiten Variante der erfindungsgemäßen Regelschaltung 200b mit Pegel- bzw. Potenzialversatzstufe U1 sind zusätzlich zu den für die erste Variante 200a mit Optokopplerdiode benötigten Bauelementen zwei Transistorstufen T1 und T2 sowie ein Spannungsteiler, der durch die beiden Widerstände R6 und R7 gebildet wird, erforderlich.

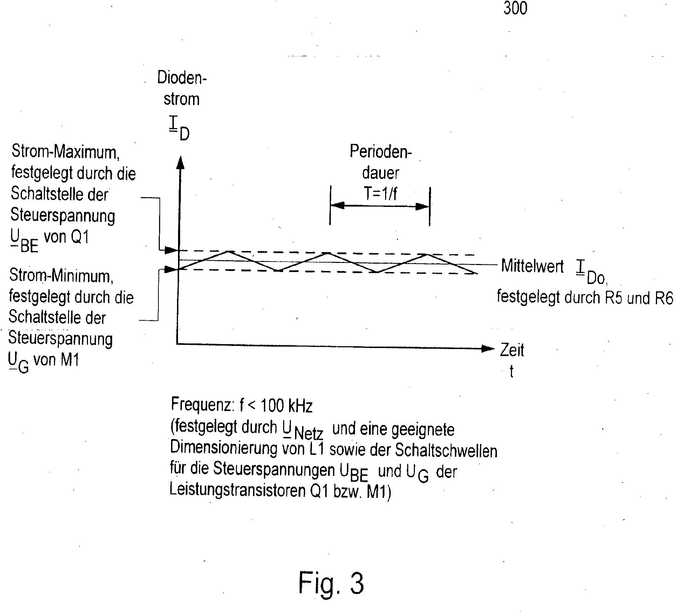

In Fig. 3 ist der zeitliche Verlauf des durch die Lumineszenzdioden D1,...,DN fließenden Diodenstroms *I_{D}* abgebildet. Es handelt sich dabei, wie dargestellt, um einen periodisch um einen Mittelwert schwankenden, dreieckförmigen Wechselstrom, dessen Frequenz durch die Schaltschwellen der zur Steuerung der beiden Leistungstransistoren M1 und Q1 benötigten Steuerspannungen *U_{G}* bzw. *U_{BE},* die Größe der Induktivität der den Lumineszenzdioden D1,...,DN vorgeschalteten Drosselspüle L1 und den Momentanwert der am Speicherkondensator C1 abfallenden Zwischenkreisspannung *U_{C1}* bestimmt wird. Für das in Fig. 3 skizzierte Beispiel wurden diese Parameter so dimensioniert, dass der resultierende Diodenstrom *I_{D}* vorzugsweise eine Frequenz von weniger als 100 kHz aufweist.

Der den Mittelwert des erhaltenen Diodenstroms *I_{D}* bildende Gleichstrom-Offset kann dabei durch eine geeignete Dimensionierung der beiden Nebenschluss-Messwiderstände R4 und R5 eingestellt werden, um die Stromquelle an die jeweilige LED anzupassen. Auf diese Weise wird eine kostengünstige Anpassung des Diodenstroms *I_{D}* an unterschiedliche LEDs ohne schaltungstechnische Zusatzmaßnahmen ermöglicht.

Im Gegensatz zu herkömmlichen Kondensatornetzteilen nach dem Stand der Technik ist die erfindungsgemäße Lösung wesentlich platzsparender. Darüber hinaus sind auch anwenderspezifische integrierte Schaltungen (engl.: "Application-Specific Integrated Circuits", ASICs) mit einem vergleichsweise geringen Platzbedarf denkbar.

**Bezugszeichenliste**

| Nr. | Schaltungssymbol |
|---|---|
| 100 | LED-Lichtstreifensystem, bestehend aus einer über ein Stromversorgungsnetz mit Wechselstrom *I_{Netz}* gespeiste Anordnung mehrerer in Serie geschalteter Lumineszenzdioden D1,...,DN, die auf einer Leiterplatte in einer "Chip-on-Board" (COB)-Technologie als LED-Dice aufgebracht sind |
| 102 | wärmeleitende, keramische Leiterplatte |
| 104 | Netzteil zur Gewährleistung einer direkten Netzstromversorgung der Leiterplatte 104 |
| 106 | transparentes Gehäuse zum Schutz der Leiterplatte 102 und der darauf als LED-Dice montierten Lumineszenzdioden D1,...,DN vor mechanischer Beschädigung |
| 108 | seitlich aus dem Versorgungsteil 104 herausgeführtes Anschlusskabel, Stecker und/oder Stecksockel zum Anschluss an ein Wechselstromnetz |
| 110 | als optisch aktive Linsenfläche dienende hochtransparente Polymermasse, eingebracht in das transparente Gehäuse 108 |
| 200a | erste Variante der erfindungsgemäßen Regelschaltung zur Bereitstellung einer geregelten Stromversorgung für eine über ein Stromversorgungsnetz mit Wechselstrom *I_{Netz}* gespeiste Anordnung mehrerer als LED-Dice auf einer Leiterplatte 102 aufgebrachter, in Serie geschalteter Lumineszenzdioden D1,...,DN eines LED-Lichtstreifensystems 100, bei der das im Rückkopplungszweig zur galvanischen Entkopplung (Potenzialtrennung) verwendete Signalübertragungsglied als Optokopplerdiode realisiert ist |
| 200b | zweite Variante der erfindungsgemäßen Regelschaltung zur Bereitstellung einer geregelten Stromversorgung für eine über ein Stromversorgungsnetz mit Wechselstrom *I_{Netz}* gespeiste Anordnung mehrerer als LED-Dice auf einer Leiterplatte 102 aufgebrachter, in Serie geschalteter Lumineszenzdioden D1,...,DN eines LED-Lichtstreifensystems 100, bei der das im Rückkopplungszweig zur galvanischen Entkopplung (Potenzialtrennung) verwendete Signalübertragungsglied als Pegel- bzw. Potenzialversatzstufe realisiert ist |
| 300 | Zeitverlauf des durch mehrere in Serie geschaltete Hochleistungs-Lumineszenzdioden D1,...,DN eines solchen LED-Lichtstreifensystems 100 fließenden Stromes *I_{D}* nach Durchführung des erfindungsgemäßen Verfahrens zur geregelten Stromversorgung für eine derartige Anordnung |
| C1 | Speicherkondensator zur Bereitstellung einer (mit der Netzspannung *U_{netz}* variierenden) geglätteten und gleichgerichteten Zwischenkreisspannung *U_{C1}* am Ausgangstor der Gleichrichter-Vollbrücke V1 |
| D1,...,DN | als LED-Dice auf einer Leiterplatte aufgebrachte, in Serie geschaltete Hochleistungs-Lumineszenzdioden (LEDs) eines LED-Lichtstreifensystems, realisiert im Rahmen einer "Chip-on-Board" (COB)-Technologie |
| DF | Freilaufdiode, parallel geschaltet zur Serienschaltung der Hochleistungs-Lumineszenzdioden D1,...,DN und dem induktiven Blindwiderstand X_{L1} im Lastkreis, zur Vermeidung einer Gefährdung des ersten Halbleiter-Leistungstransistors M1 durch die beim Abschalten des Drainstroms *I_{D}* (im Falle eines Sperrens von M1) am induktiven Blindwiderstand X_{L1} abfallende Induktionsspannung *U_{L1},* die ein Vielfaches der Betriebsspannung betragen kann |
| M1 | erster elektronisch steuerbarer Halbleiter-Leistungsschalter, realisiert als Feldeffekttransistor (FET), z.B. als selbstsperrender n-Kanal-MOSFET mit der Steuerspannung *U_{G}* |
| Q1 | zweiter elektronisch steuerbarer Halbleiter-Leistungsschalter, realisiert als bipolarer npn-Transistor mit der Steuerspannung *U_{BE}* |
| R1 | niederohmiger Lade-/Entladewiderstand im Parallelzweig der Serienschaltung aus den Hochleistungs-Lumineszenzdioden D1,...,DN sowie dem induktiven Blindwiderstand X_{L1} |
| R2 | Wirkwiderstand der Vorschaltdrossel L1 |
| R3 | Vorwiderstand im Steuerkreis des bipolaren npn-Transistors Q1 |
| R4 | zweiter niederohmiger Nebenschluss-Messwiderstand (engl.: "Shunt") zur Erfassung des mit Hilfe der ersten Schaltstufe M1 auf einen Minimalwert begrenzten Absinkens des während eines in der Speicherdrossel L1 ablaufenden Entladevorgangs durch die Hochleistungs-Lumineszenzdioden D1,...,DN und die Speicherdrossel L1 fließenden Diodenstroms *I_{D}* im freilaufenden Strompfad, d.h. im Parallelzweig zur Serienschaltung aus den Hochleistungs-Lumineszenzdioden D1,...,DN und der Speicherdrossel, in Serie geschaltet zu der Freilaufdiode DF |
| R5 | erster niederohmiger Nebenschluss-Messwiderstand (engl.: "Shunt") zur Erfassung des mit Hilfe der zweiten Schaltstufe Q1 auf einen Maximalwert begrenzten Ansteigens des durch die Hochleistungs-Lumineszenzdioden D1,...,DN fließenden Diodenstroms *I_{D}*, vorzugsweise realisiert als einstellbarer Widerstand (Potentiometer) zur Helligkeits-Dimmung der Hochleistungs-Lumineszenzdioden D1,...,DN, welcher zugleich im Lastkreis des ersten Leistungsschalters M1 sowie im Steuerkreis des zweiten Leistungsschalters Q1 angeordnet sowie mit dem Masseknoten verbunden ist |
| R6 | erster Widerstand eines aus R6 und R7 bestehenden Spannungsteilers für die im Rahmen der zweiten Variante der erfindungsgemäßen Regelschaltung 200b als Signalübertragungsglied U1 vorgesehene Pegel- bzw. Potenzialversatzstufe |
| R7 | zweiter Widerstand eines aus R6 und R7 bestehenden Spannungsteilers für die im Rahmen der zweiten Variante der erfindungsgemäßen Regelschaltung 200b als Signalübertragungsglied U1 vorgesehene Pegel- bzw. Potenzialversatzstufe |
| T1 | erste Transistorstufe für die im Rahmen der zweiten Variante der erfindungsgemäßen Regelschaltung 200b als Signalübertragungsglied U1 vorgesehene Pegel-bzw. Potenzialversatzstufe, realisiert als bipolarer pnp-Transistor |
| T2 | zweite Transistorstufe für die im Rahmen der zweiten Variante der erfindungsgemäßen Regelschaltung 200b als Signalübertragungsglied U1 vorgesehene Pegel-bzw. Potenzialversatzstufe, realisiert als bipolarer npn-Transistor |
| U1 | Signalübertragungsglied im Rückkopplungszweig des an dem zweiten Messwiderstand R4 abgegriffenen, durch die Hochleistungs-Lumineszenzdioden D1,...,DN fließenden Stromes *I_{D}* auf den Steuereingang der ersten Schaltstufe M1 zur galvanischen Entkopplung (Potenzialtrennung) der an dem zweiten Messwiderstand R4 abfallenden Spannung *U_{R4}* und der Steuerspannung *U_{G}* der ersten Schaltstufe M1, realisiert als Optokopplerdiode (vgl. Fig. 2a) bzw. als Pegel- bzw. Potenzialversatzstufe (vgl. Fig. 2b) |
| V1 | Gleichrichter-Vollbrücke zur Gleichrichtung der positiven und/oder negativen Netzhalbwellen des von einem Stromversorgungsnetz gelieferten Wechselstroms *I_{Netz}* |
| X_{L1} | induktiver Blindwiderstand einer Spule L1, als Vorschaltdrossel zur Filterung von Oberwellen in Serie geschaltet zu den Hochleistungs-Lumineszenzdioden D1,...,DN, zur Verlängerung der Stromflussdauer des durch die Hochleistungs-Lumineszenzdioden D1,...,DN fließenden Stromes *I_{D}* |
| Z1 | Zenerdiode als Spannungsbegrenzer zur Stabilisierung der Eingangsspannung *U_{Z1}* an den Ausgangsklemmen 3 und 4 der Optokopplerdiode, Pegel- bzw. Potenzialversatzstufe U1 |
| µP | Mikroprozessor zur Regelung des als Potentiometer ausgebildeten Vorwiderstands R3 zwecks Dimmung der Hochleistungs-Lumineszenzdioden D1,...,DN |

## Patentansprüche

1. LED-Beleuchtungsmodul, aufweisend wenigstens eine Lumineszenzdiode (D1,...,DN) und eine Stromversorgungsschaltung mit:
- mindestens einem als Speicherdrossel (L1) in Serie zu der Lumineszenzdiode (D1,...,DN) geschalteten induktiven Blindwiderstand (XL1),
- einer Schaltstufe (M1) zur Umschaltung zwischen den in der Speicherdrossel (L1) ablaufenden Lade- bzw. Entladevorgängen,
- einem parallel zur Lumineszenzdiode (D1,...,DN) und der Speicherdrossel (L1) geschalteten freilaufenden Strompfad für wenigstens einen Teil des von der Speicherdrossel (L1) bei Sperrung der Schaltstufe (M1) an die Lumineszenzdiode (D1,...,DN) abgegebenen Entladestroms und
- Mitteln zum Erfassen des durch die Lumineszenzdiode (D1,...,DN) und die Speicherdrossel (L1) fließenden absinkenden Entladestroms,
**dadurch gekennzeichnet, dass:**
- das Absinken des Entladestroms mittels der Schaltstufe (M1) auf einen Minimalwert begrenzt ist und
- die wenigstens eine Lumineszenzdiode (D1,...,DN) eine blau emittierende Lumineszenzdiode (D1,...,DN) ist, welche mittels eines über der Lumineszenzdiode (D1,...,DN) angeordneten Farbkonversionsmaterials weißes Licht erzeugt.

2. LED-Beleuchtungsmodul nach Anspruch 1,
aufweisend eine im freilaufenden Strompfad geschaltete Freilaufdiode (DF).

3. LED-Beleuchtungsmodul nach Anspruch 2,
wobei die Freilaufdiode (DF) antiparallel zu der Lumineszenzdiode (D1,...,DN) und der Speicherdrossel (L1) geschaltet ist.

4. LED-Beleuchtungsmodul nach Anspruch 3,
wobei das LED Beleuchtungsmodul wenigstens zwei in Serie geschaltete Lumineszenzdioden (D1,...,DN) aufweist.

5. LED-Beleuchtungsmodul nach einem der Ansprüche 3 oder 4, wobei die Stromversorgungsschaltung ferner aufweist:
einen ersten Nebenschluss-Messwiderstand (R5) zur Erfassung des durch die Lumineszenzdioden (D1,...,DN) während eines in der Speicherdrossel (L1) ablaufenden Ladevorgangs fließenden Diodenstroms (*I_{D}*).

6. LED-Beleuchtungsmodul nach Anspruch 5, wobei der erste Nebenschluss-Messwiderstand (R5) zum Dimmen der Lumineszenzdioden (D1,...,DN) einstellbar ist.

7. LED-Beleuchtungsmodul nach einem der Ansprüche 3 bis 6, wobei die Stromversorgungsschaltung ferner aufweist:
einen zweiten Nebenschluss-Messwiderstand (R4) zur Erfassung des durch die Lumineszenzdioden (D1,...,DN) während eines in der Speicherdrossel (L1) ablaufenden Entladevorgangs fließenden Diodenstroms (*I_{D}*).

8. LED-Beleuchtungsmodul nach Anspruch 7, wobei die Stromversorgungsschaltung ferner aufweist:
ein zur galvanischen Entkopplung der an dem zweiten Messwiderstand (R4) abfallenden Spannung und der Steuerspannung (*U_{G}*) der ersten Schaltstufe (M1) dienendes Signalübertragungsglied (U1) zur Rückkopplung des an dem zweiten Messwiderstand (R4) abgegriffenen, durch die Lumineszenzdioden (D1,...,DN) fließenden Stromes (*I_{D}*) auf den Steuereingang der ersten Schaltstufe (M1).

9. LED-Beleuchtungsmodul nach Anspruch 8, wobei es sich bei dem zur Potenzialtrennung eingesetzten Signalübertragungsglied (U1) um eine Optokopplerdiode handelt.

10. LED-Beleuchtungsmodul nach Anspruch 8, wobei es sich bei dem zur Potenzialtrennung eingesetzten Signalübertragungsglied (U1) um eine Pegelversatzstufe handelt.

11. LED-Beleuchtungsmodul nach einem der Ansprüche 3 bis 10, wobei die Stromversorgungsschaltung ferner aufweist:
eine Zenerdiode (Z1) als Spannungsbegrenzer zur Stabilisierung der an den Ausgangsklemmen der Optokopplerdiode, Pegel- bzw. Potenzialversatzstufe (U1) abgreifbaren Steuerspannung (*U_{G}*) des ersten elektronisch steuerbaren Halbleiter-Leistungstransistors (M1).

12. LED-Beleuchtungsmodul nach einem der Ansprüche 3 bis 11, wobei die Stromversorgungsschaltung ferner aufweist:
ein Potentiometer (R3) als Vorwiderstand im Steuerkreis des ersten Halbleiter-Leistungstransistors (M1) zur Dimmung der dem Diodenstrom (*I_{D}*) proportionalen Lichtstärke (*Iᵥ*) der von den Lumineszenzdioden (D1,...,DN) emittierten Strahlung.

13. LED-Beleuchtungsmodul nach einem der Ansprüche 3 bis 12, wobei die Stromversorgungsschaltung ferner aufweist:
eine zeitabhängige Steuerung zur Umschaltung zwischen den in der Speicherdrossel (L1) ablaufenden Lade- bzw. Entladevorgängen.

## Claims

1. LED lighting module, having at least one light emitting diode (D1,...,DN) and an power supply circuit with:
- at least one inductive reactance (XL1) connected in series to the light emitting diode (D1,...,DN) as storage choke (L1),
- a switching stage (M1) for switching between the charging and discharging processes occurring in the storage choke (L1),
- a free-running current path, connected in parallel to the light emitting diode (D1,..., DN) and the storage choke (L1), for at least a part of the discharge current issued by the storage choke (L1) to the light emitting diode (D1, ..., DN) upon the blocking of the switching stage (M1), and
- means for measuring the decreasing discharge current flowing through the light emitting diode (D1, ..., DN) and the storage choke (L1),
**characterized in that**:
- the decreasing of the discharge current is limited to a minimum value by the switching stage (M1), and
- the at least one light emitting diode (D1, ..., DN) is a blue-emitting light emitting diode (D1, ..., DN), which generates white light by means of a color conversion material arranged over the light emitting diode (D1, ..., DN).

2. LED lighting module according to claim 1, having a free-running diode (DF) connected in the free-running current path.

3. LED lighting module according to claim 2, wherein the free-running diode (DF) is connected anti-parallel to the light emitting diode (D1, ..., DN) and the storage choke (L1).

4. LED lighting module according to claim 3, wherein the LED lighting module has at least two light emitting diodes (D1, ..., DN) connected in series.

5. LED lighting module according to one of the claims 3 or 4, wherein the power supply circuit further has:
a first shunt measurement resistance (R₅) for detection of the diode current (*I_{D}*) flowing through the light emitting diodes (D1, ..., DN) during a charging process occurring in the storage choke (L1).

6. LED lighting module according to claim 5, wherein the first shunt measurement resistance (R₅) is adjustable for dimming the light emitting diodes (D1, ..., DN).

7. LED lighting module according to one of the claims 3 to 6, wherein the power supply circuit further comprises:
a second shunt measurement resistance (R₄) for detection of the diode current (*I_{D}*) flowing through the light emitting diodes (D1, ..., DN) during a discharging process occurring in the storage choke (L1).

8. LED lighting module according to claim 7, wherein the power supply circuit further comprises:
a signal transmission element (U1) serving for the galvanic decoupling of the voltage decreasing at the second measuring resistance (R₄) and the control voltage (*U_{G}*) of the first switching stage (M1) for feedback of the current (*I_{D}*) flowing through the light emitting diodes (D1, ..., DN) and tapped off at the second shunt measurement resistance (R₄) to the control input of the first switching stage (M1).

9. LED lighting module according to claim 8, wherein the signal transmission element (U1) used for the electrical isolation is an optocoupler diode.

10. LED lighting module according to claim 8, wherein the signal transmission element (U1) used for the electrical isolation is a level offset stage.

11. LED lighting module according to one of the claims 3 to 10, wherein the power supply circuit further comprises:
a Zener diode (Z1) as voltage limiter for stabilization of the control voltage (*U_{G}*) which can be tapped off at the output terminals of the optocoupler diode, level or potential offset stage (U1), of the first electronically controllable semiconductor power transistor (M1).

12. LED lighting module according to one of the claims 3 to 11, wherein the power supply circuit further comprises:
a potentiometer (R3) as series resistance in the control circuit of the first semiconductor power transistor (M1) for dimming the light intensity (*Iᵥ*), proportional to the diode current (*I_{D}*)*,* of the radiation emitted by the light emitting diodes (D1, ..., DN).

13. LED lighting module according to one of the claims 3 to 12, wherein the power supply circuit further comprises:
a time-dependent control for switching between the charging/discharging processes occurring in the storage choke (L1).

## Revendications

1. Module d'éclairage à DEL, ayant au moins une diode luminescente (D1, ..., DN) et un circuit d'alimentation en courant comportant :
- au moins une réactance inductive (XL1) reliée en série à la diode luminescente (D1, ..., DN) comme étant une bobine d'arrêt de stockage (L1),
- un étage de commutation (M1) destiné à commuter entre les processus de charge/décharge se déroulant dans la bobine d'arrêt de stockage (L1),
- une ligne de courant non synchronisée, reliée en parallèle à la diode luminescente (D1, ..., DN) et à la bobine d'arrêt de stockage (L1), pour au moins une partie du courant de décharge produit par la bobine d'arrêt de stockage (L1) à la diode luminescente (D1, ..., DN) lors du blocage de l'étage de commutation (M1), et
- des moyens destinés à mesurer le courant de décharge décroissant traversant la diode luminescente (D1, ..., DN) et la bobine d'arrêt de stockage (L1), **caractérisé en ce que** :
- la décroissance du courant de décharge est limitée à une valeur minimum au moyen de l' étage de commutation (M1), et
- l' au moins une diode luminescente (D1, ..., DN) est une diode luminescente émettant dans le bleu (D1, ..., DN), qui génère de la lumière blanche au moyen d'un matériau à conversion de couleur placé sur la diode luminescente (D1, ..., DN).

2. Module d'éclairage à DEL selon la revendication 1, ayant une diode non synchronisée (DF) reliée à la ligne de courant non synchronisée.

3. Module d'éclairage à DEL selon la revendication 2, dans lequel la diode non synchronisée (DF) est reliée de façon anti-parallèle à la diode luminescente (D1, ..., DN) et à la bobine d'arrêt de stockage (L1).

4. Module d'éclairage à DEL selon la revendication 3, dans lequel le module d'éclairage à DEL possède au moins deux diodes luminescentes (D1, ..., DN) reliées en série.

5. Module d'éclairage à DEL selon l'une des revendications 3 ou 4, dans lequel le circuit d'alimentation en courant comporte de plus :
une première résistance de mesure de dérivation (R₅) destinée à mesurer le courant de diode (*I_{D}*) traversant les diodes luminescentes (D1, ..., DN) lors d'un processus de charge se déroulant dans la bobine d'arrêt de stockage (L1).

6. Module d' éclairage à DEL selon la revendication 5, dans lequel la première résistance de mesure de déviation (R₅) est réglable pour effectuer une gradation de lumière des diodes luminescentes (D1, ..., DN).

7. Module d'éclairage à DEL selon l' une des revendications de 3 à 6, dans lequel le circuit d'alimentation en courant comporte de plus :
une seconde résistance de mesure de dérivation (R₄) destinée à mesurer le courant de diode (*I_{D}*) traversant les diodes luminescentes (D1, ..., DN) lors d'un processus de décharge se déroulant dans la bobine d'arrêt de stockage (L1).

8. Module d'éclairage à DEL selon la revendication 7, dans lequel le circuit d'alimentation en courant comporte de plus :
un élément de transmission de signal (U1) servant au découplage galvanique de la tension décroissant à la seconde résistance de mesure (R₄) et à la tension de commande (*U_{G}*) du premier étage de commutation (M1) pour le rétro-couplage du courant (*I_{D}*) prélevé sur la seconde résistance de mesure (R₄) et traversant les diodes luminescentes (D1, ..., DN) sur l' entrée d'asservissement du premier étage de commutation (M1).

9. Module d'éclairage à DEL selon la revendication 8, dans lequel l' élément de transmission de signal (U1) utilisé pour l'isolation électrique est un optocoupleur.

10. Module d'éclairage à DEL selon la revendication 8, dans lequel l'élément de transmission de signal (U1) utilisé pour l'isolation électrique est un étage de décalage de calibrage.

11. Module d'éclairage à DEL selon l'une des revendications de 3 à 10, dans lequel le circuit d'alimentation en courant comporte de plus :
une diode Zener (Z1) comme limiteur de tension afin de stabiliser la tension de commande (*U_{G}*) du premier transistor de puissance semi-conducteur contrôlable électroniquement (M1) qui peut être prélevée aux bornes de sortie de l' optocoupleur, de l'étage de décalage de calibrage ou de l'étage de décalage de potentiel (U1).

12. Module d'éclairage à DEL selon l' une des revendications de 3 à 11, dans lequel le circuit d'alimentation en courant comporte de plus :
un potentiomètre (R₃) comme résistance en série dans le circuit de commande du premier transistor de puissance semi-conducteur (M1) pour effectuer une gradation de l'intensité lumineuse (*Iᵥ*), proportionnelle au courant de diode (*I_{D}*) du rayonnement émis par les diodes luminescentes (D1, ..., DN).

13. Module d'éclairage à DEL selon l' une des revendications de 3 à 12, dans lequel le circuit d'alimentation en courant comporte de plus :
un contrôleur à dépendance temporelle destiné à commuter entre les processus de charge/décharge se déroulant dans la bobine d'arrêt de stockage (L1).
